# EUROPÄISCHE PATENTANMELDUNG

(11) **EP 0 878 629 A2**
(43) Veröffentlichungstag der Anmeldung: **18.11.1998**
(21) Anmeldenummer: 98107339.8
(22) Anmeldetag: 22.04.1998
(51) Int. Cl.: F16B 5/02

(54) **Kopplungsvorrichtung**

(30) Priorität: 15.05.1997 DE 19720254
(71) Anmelder: ROBERT BOSCH GMBH, 70442 Stuttgart (DE)
(72) Erfinder: Eckstein, Dietrich, 77876 Kappelrodeck (DE); Rohrer, Guenter, 77880 Sasbach (DE); Oberle, Hans-Juergen, 76437 Rastatt (DE); Moench, Wolfgang, 76532 Baden-Baden (DE); Brandes, Joerg, 98708 Gehren (DE)

(57) **Zusammenfassung**

Es wird eine Kopplungsvorrichtung zur mechanischen Kopplung eines ersten Gehäuseteils (102) an ein zweites Gehäuseteil (104, 204) einer insbesondere elektromotorischen Antriebseinheit vorgeschlagen. Die Kopplung erfolgt durch wenigstens ein Verbindungsglied (108, 208), das an dem ersten Gehäuseteil (102) gestellfest und an dem zweiten Gehäuseteil mit Spiel (104) und/oder mit im Verhältnis zu seiner Gesamtfläche geringer Anlagefläche (204) befestigbar ist.

## Beschreibung

### Stand der Technik

Die Erfindung betrifft eine Kopplungsvorrichtung nach der Gattung des Hauptanspruchs.

Bei der starren mechanischen Kopplung eines ersten Gehäuseteils an ein zweites Gehäuseteil können störende Geräusche, die in einem der beiden Gehäuseteile entstehen, auf das andere Gehäuseteil übertragen werden. Dieses Problem tritt beispielsweise bei der Kopplung eines nachgeordneten Gehäuses an das Gehäuse einer elektromotorischen Antriebseinheit auf. Derartige Antriebseinheiten werden in Kraftfahrzeugen zur Verstellung von Ausstattungsteilen wie Sitzen, Fenstern, Schiebe-Hebedächern usw. eingesetzt. Dort besteht der Bedarf nach einer verstärkten Geräuschdämpfung der von den Antriebseinheiten ausgehenden akustischen Signale, die durch Unwuchten und Resonanzen der Elektromotoren der Antriebseinheiten erzeugt werden.

Aus der DE-OS 29 03 541 ist bereits eine Kopplungsvorrichtung für Einbaugeräte, insbesondere zum Einbau von Kombinationseinheiten von Ahzeigeinstrumenten eines Kraftfahrzeuges in ein Armaturenbrett bekannt, bei der die Kopplung durch Klammern aus elastischem Material erfolgt. Die Verbindung zweier Gehäuseteile durch elastische Verbindungselemente ermöglicht die Dämpfung der zwischen den Gehäuseteilen übertragenen akustischen Signale. Allerdings ist die Verbindung aufwendig, da zusätzliche Bauteile in Form der elastischen Elemente benötigt werden, und bietet nur geringe mechanische Stabilität gegenüber angreifenden Kräften.

### Vorteile der Erfindung

Die erfindungsgemäße Kopplungsvorrichtung mit den Merkmalen des Hauptanspruchs hat den Vorteil, daß die Kopplung bis auf ein geringes Spiel fest gegen äußere Kräfte ist und gleichzeitig die Übertragung von in dem Zweiten Gehäuseteil entstehenden akustischen Signalen in das erste Gehäuseteil stark verringert wird. Die Anordnung des Verbindungsgliedes in dem zweiten Gehäuseteil mit Spiel oder geringer Anlagefläche bewirkt einen Sprung der akustischen Impedanzen im Schallaufweg und damit eine starke Dämpfung des übertragenen Schalls. Dadurch werden Resonanzen in dem anderen Gehäuseteil und störende Geräusche beispielsweise in einem von einer Antriebseinheit angetriebenen Stellteil vermieden. Als geringe Anlagefläche ist hier insbesondere eine punkt- oder Linienförmige Auflage zu verstehen, wobei es von Vorteil sein kann, wenn eine geringe Anlagefläche in einer Richtung mit einem geringen Spiel in anderer Richtung kombiniert ist.

Versuche haben gezeigt, daß der Geräuschpegel, der von einer für den Einsatz als Sitzverstellantrieb in Kraftfahrzeugen vorgesehenen elektromotorischen Antriebseinheit auf ein nachgeordnetes Gehäuseteil übertragen wird, um bis zu 10 dB gegenüber dem bei starrer Kopplung übertragenen Geräuschpegel abgedämpft ist. Gleichzeitig entfällt die kostenträchtige Notwendigkeit zur Verwendung elastischer Verbindungselemente. Das Spiel zwischen Verbindungsglied und zweitem Gehäuseteil muß so gewählt werden, daß die dadurch möglichen Lageänderungen der Gehäuseteile zueinander die Funktion der Baugruppen in den Gehäuseteilen nicht beeinträchtigt, insbesondere, wenn die Baugruppen zusammenwirken.

Durch die in den vom Hauptanspruch abhängigen Ansprüche aufgeführten Merkmale sind vorteilhafte Ausgestaltungen und Weiterbildungen der Kopplungsvorrichtung möglich.

Wird das Verbindungsglied in einer Ausnehmung im zweiten Gehäuseteil angeordnet, kann die Verbindung der beiden Gehäuseteile platzsparend und kompakt erfolgen. Da nicht das Verbindungsglied selbst wie in der vorbekannten Vorrichtung die Geräuschdämpfung übernimmt, kann es aus formsteifem Material, beispielsweise Blech oder Stahl, bestehen und die Ausnehmung wirkungsvoll gegen Verformung durch äußere Druckkräfte schützen. Diese Eigenschaft kommt insbesondere dann zum Tragen, wenn die Gehäuseteile aus gespritztem Kunststoff bestehen.

Vorteilhaft ist das wenigstens eine Verbindungsglied in ungekoppeltem Zustand, also vor Zusammenbau der beiden Gehäuseteile, an dem zweiten Gehäuseteil fixierbar. Dadurch kann es an dem zweiten Gehäuseteil vormontiert und mit dem Gehäuseteil als Baugruppe zur späteren Ankopplung an das erste Gehäuseteil ausgeliefert werden. Die automatisierte, maschinelle Kopplung der Gehäuseteile wird erheblich erleichtert, weil ein zusätzlicher und zudem schwer zu beherrschender Arbeitsgang - das Einführen des Verbindungsgliedes in die z. B. als Bohrung ausgeführte Ausnehmung des zweiten Gehäuseteils - entfällt.

In einer Weiterbildung der Erfindung weist die Ausnehmung eine Verjüngung und/oder das Verbindungsglied einen seinen Querschnitt erweiternden Bund auf. Hier sind insbesondere zwei Ausführungsformen vorteilhaft: Zum einen kann das Verbindungsglied einen Bund und die Ausnehmung eine Verjüngung aufweisen. Der Bund stellt dann eine Querschnittserweiterung des Verbindungsgliedes dar, die mit der Verjüngung der Ausnehmung zur Fixierung in ungekoppeltem Zustand zusammenwirkt. Zum anderen können entweder die Verjüngung oder der Bund wahlweise eine geringe Anlagefläche darstellen, an der das Verbindungsglied am zweiten Gehäuseteil anliegt. In diesem Fall kann die Anlagefläche nochmals verringert und damit der Impedanzsprung im Schallaufweg vergrößert werden, wenn der Bund in Umfangsrichtung unterbrochen ist und eine Rippenstruktur aufweist.

Die Rippenstruktur des Bundes kann vorteilhaft als Klemmrippen wirken und das Verbindungsglied axial zum zweiten Gehäuseteil fixieren, sodaß eine Verschiebung des Verbindungsgliedes vermieden wird.

In einer günstigen Ausführungsform haben die Klemmrippen einen im wesentlichen halbkreisförmigen Querschnitt, und der Oberflächenabschnitt des Verbindungsgliedes liegt an den Scheitelpunkten der Halbkreise an. Die Scheitelpunkte der Halbkreise sind - im Querschnitt gesehen - diejenigen Punkte des Halbkreisumfangs, die zur Innenwand der Ausnehmung maximalen Abstand haben. Durch die Halbkreisform ist die Anlagefläche jeder Klemmrippe an dem Verbindungsglied punkt- oder linienförmig minimiert und bietet der Schallübertragung maximalen Widerstand.

Soll das Verbindungsglied das zweite Gehäuseteil mit Spiel an das erste Gehäuseteil koppeln, so ist es von Vorteil, wenn das Verbindungsglied eine Querschnittserweiterung und die Ausnehmung wenigstens eine Verjüngung aufweist, die bei hergestellter Kopplung mit Abstand voneinander angeordnet und in ungekoppeltem Zustand zur Fixierung des Verbindungsgliedes am ersten Gehäuseteil zusammenwirken. Durch diese Maßnahme ist das Verbindungsglied vor der Kopplung unverlierbar an dem zweiten Gehäuseteil angeordnet, während es sich bei der Kopplung im zweiten Gehäuseteil mit Spiel befindet. Die Verjüngung und die Querschnittserweiterung können beispielsweise zusammenwirken, indem der Durchmesser der Ausnehmung im Bereich der Verjüngung etwas kleiner als der Durchmesser der Querschnittserweiterung ist und das Verbindungsglied mit seiner Querschnittserweiterung in der Verjüngung festgeklemmt ist. In gekoppeltem Zustand kann der Durchmesser der Ausnehmung an der Position der Querschnittserweiterung dann größer als diese sein.

Eine besonders einfache Ausführungsform des wenigstens einen Verbindungsglieds weist eine Hülse und eine Schraube auf. Die Schraube verbindet die Hülse gestellfest mit dem ersten Gehäuseteil, beispielsweise durch eine in dem ersten Gehäuseteil angeordnete Gewindebohrung. Dieses Verbindungsglied ist einerseits kostengünstig und bietet andererseits gute Stabilität gegen angreifende äußere Kräfte. Durch das Anziehen der Schraube bei der Montage (Kopplung) der beiden Gehäuseteile kann eine in ungekoppeltem Zustand am zweiten Gehäuseteil durch Klemmrippen oder äquivalente Vorrichtungen fixierte Hülse in eine zweite Lage mit Spiel gebracht werden.

Vorteilhaft ist die Hülse in einer Ausnehmung im zweiten Gehäuseteil angeordnet und wird von der Schraube durchgriffen. Ein Schraubenkopf der Schraube weist einen Querschnitt auf, der größer als der Querschnitt der Ausnehmung ist. Der Schraubenkopf fixiert die Hülse bei angezogener Schraube somit gestellfest am ersten Gehäuseteil. Dadurch ist das Verbindungsglied aus Schraube und Hülse äußerst kompakt, während die beiden Gehäuseteile leicht montierbar sind.

Die Ausnehmung kann in einer einfachen Ausführung eine Bohrung in dem zweiten Gehäuseteil mit einem Durchmesser sein, der wenigstens über den größten Teil der Bohrung hinweg größer als der der Hülse ist. Dadurch ist sichergestellt, daß das Verbindungsglied in radialer Richtung mit Spiel oder geringer Anlagefläche am zweiten Gehäuseteil angeordnet ist.

Das Verbindungsglied aus Schraube und Hülse hat auch in axialer Richtung Spiel, wenn die Länge der Hülse größer als die Länge der Ausnehmung oder Bohrung ist. Die axiale Fixierung der beiden Gehäuseteile zueinander wird besonders einfach dadurch sichergestellt, daß der Querschnitt eines Kopfes der Schraube größer als der Querschnitt der Ausnehmung ist.

Vorteilhaft ist die Hülse in axialer Richtung geschlitzt, sodaß sie in der Ausnehmung im Gehäuse weniger Bauraum einnimmt. Der Schlitz umfaßt ein Winkelsegment von weniger als 180°, vorzugsweise etwa 90° im Hülsenquerschnitt, wodurch die Schraube in der Hülse trotz des Schlitzes geführt bleibt.

Die Verwendung eines Verbindungsgliedes aus unelastischem Material bietet den Vorteil größerer Stabilität gegen Kräfte am Verbindungsglied und erhöhter Standzeit, insbesondere bei Vibrationen.

Die erfindungsgemäße Kopplungsvorrichtung ist besonders bei der Ankopplung einer elektromotorischen Antriebseinheit an ein Stellteil oder ein zusätzliches nachgeordnetes Getriebeglied von Vorteil. Derartige Antriebseinheiten bestehen häufig aus einem Getriebe und einem Elektromotor mit einer Motorankerwelle, die in ein Gehäuse des Getriebes verlängert, getriebeseitig als Schneckenwelle ausgebildet ist und mit einem Schneckenrad im Getriebe in Eingriff steht. Insbesondere kleinere, in Kraftfahrzeugen verwendete Antriebseinheiten besitzen Resonanzfrequenzen im Bereich von ca. 50 bis 150 Hz. Da auch die üblicherweise verwendeten Motordrehzahlen in dieser Größenordnung liegen, ergibt sich eine beträchtliche Lärmentwicklung bei dem Betrieb der Antriebseinheiten, deren Übertragung auf das Stellteil, ein Stellteilgehäuse oder das zusätzliche Getriebegehäuse wirkungsvoll verhindert wird.

### Zeichnung

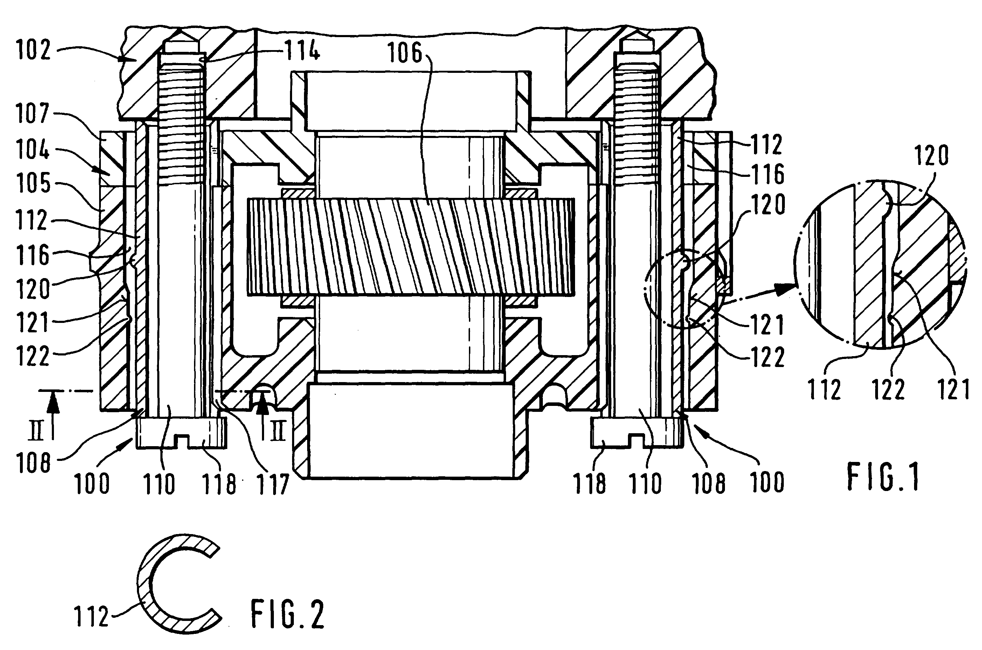

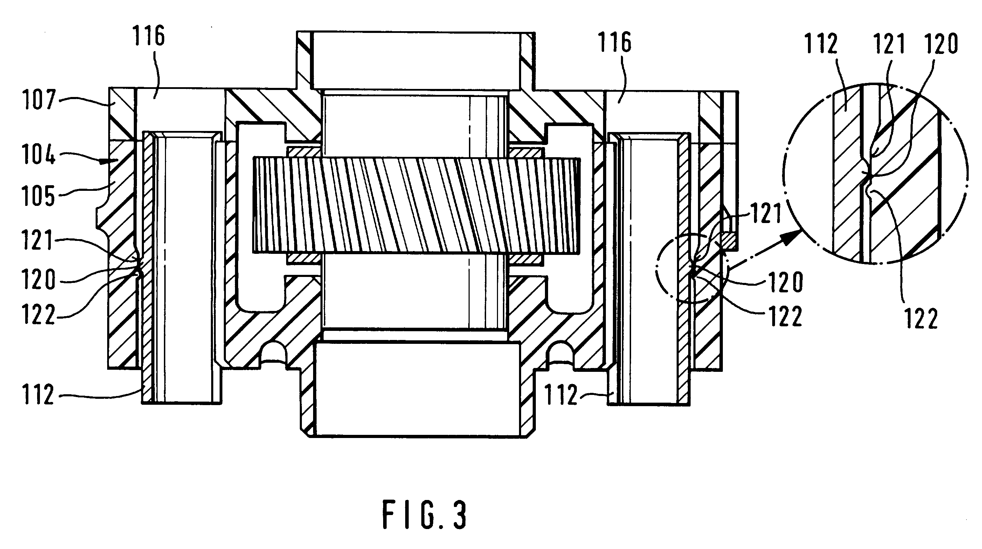

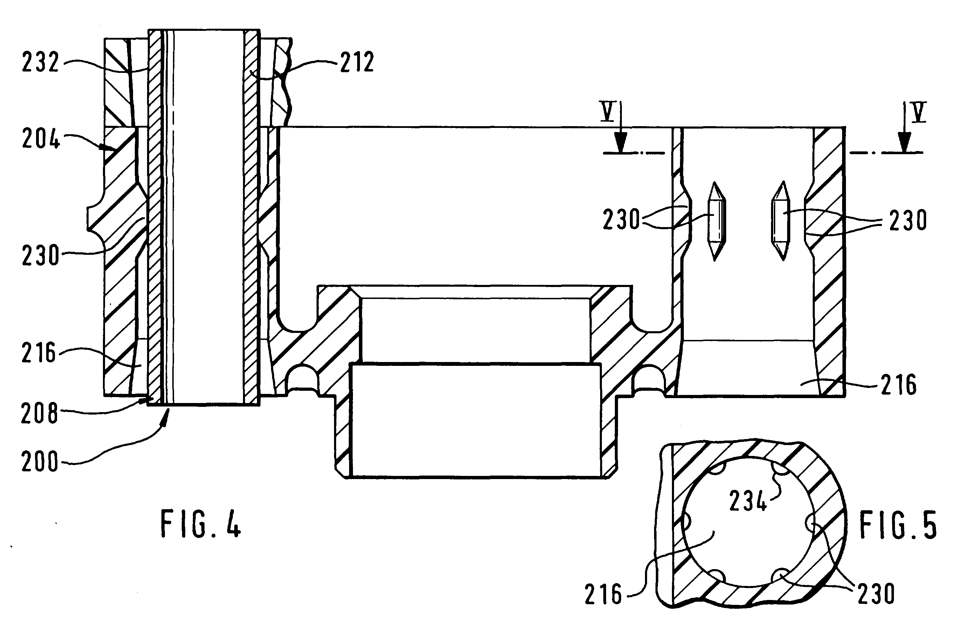

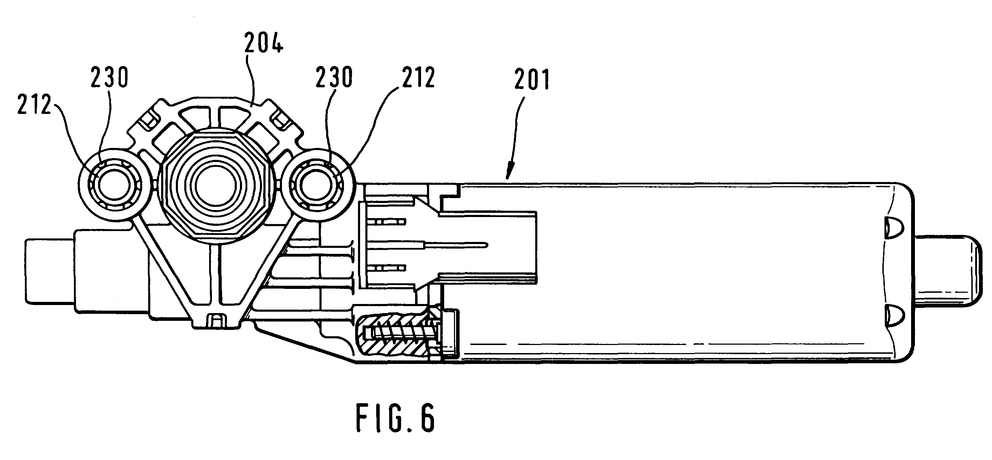

Es zeigen die Figur 1 ein erstes Ausführungsbeispiel der erfindungsgemäßen Kopplungsvorrichtung geschnitten, die Figur 2 einen Schnitt einer Hülse eines Verbindungsgliedes der Kopplungsvorrichtung nach Figur 1, die Figur 3 die Kopplungsvorrichtung nach Figur 1 geschnitten vor der Herstellung der Kopplung, die Figur 4 ein zweites Ausführungsbeispiel der Kopplungsvorrichtung in einem Gehäuseteil geschnitten, die Figur 5 einen Schnitt nach V-V in der Figur 4 und die Figur 6 eine elektromotorische Antriebseinheit mit der Kopplungsvorrichtung nach Figur 4.

### Beschreibung der Ausführungsbeispiele

Die Figur 1 zeigt ein erstes Ausführungsbeispiel zweier erfindungsgemäßer Kopplungsvorrichtungen 100, die der Kopplung eines ersten Gehäuseteils 102 an ein zweites Gehäuseteil 104 dienen, das aus einem Gehäusekörper 105 und einem daran angeklipsten Deckel 107 besteht. Beide Gehäuseteile 102 und 104 sind aus Kunststoff gespritzt. Das zweite Gehäuseteil 104 ist an einer nicht näher dargestellten elektromotorischen Antriebseinheit angeordnet und nimmt ein dem Elektromotor der Antriebseinheit nachgeordnetes Schneckengetriebe auf. Das Schneckengetriebe besteht aus einer getriebeseitig als Schneckenwelle ausgebildeten Motorankerwelle und einem Getrieberad 106. Die Kopplung des ersten Gehäuseteils 102 an das zweite Gehäuseteil 104 erfolgt durch Verbindungsglieder 108, die an dem ersten Gehäuseteil 102 gestellfest und an dem zweiten Gehäuseteil 104 mit Spiel angeordnet sind. Die Verbindungsglieder 108 weisen jeweils Schrauben 110 und Hülsen 112 auf, die von den Schrauben 110 durchgriffen sind. Die Schrauben 110 verbinden die Hülsen 112 gestellfest mit dem ersten Gehäuseteil 102, in dem sie in Gewindebohrungen 114 im ersten Gehäuseteil 102 eingeschraubt sind und die Hülsen 112 in Schraubrichtung gegen das Gehäuseteil 102 pressen.

Die Hülsen 112 sind in Ausnehmungen 116 im zweiten Gehäuseteil 104 angeordnet, wo sie durch einen Schraubenkopf 118 mit einem Querschitt, der größer als der Querschnitt der Ausnehmung 116 ist, unverlierbar gehalten werden. Ein Schnitt entlang der Linie II-II in der Figur 1 durch die Hülsen 112 ist in der Figur 2 gezeigt. Sie sind an ihrer dem Getrieberad 106 zugewandten Seite in axialer Richtung geschlitzt; der Schlitz verläuft in Umfangsrichtung des Hülsenzylinders über einen Winkel von etwa 90°. Die Ausnehmungen 116 sind im wesentlichen zylinderförmig ausgebildet; in axialer Richtung ist an ihren Innenwänden jeweils ein Steg 117 angeordnet, der in den Schlitz der Hülsen 112 greift und die Hülsen auf diese Weise gegen Verdrehung in den Ausnehmungen 116 sichert.

Die Hülsen 112 weisen entlang ihres äußeren Umfangs axial etwa in ihrer Mitte einen äußeren Bund 120 als Querschnittserweiterung auf, dessen äußerster Radius kleiner als der Radius der Ausnehmungen 116 ist. Der Bund 120 kann an die Hülsen 112 angeformt oder auch ausgeprägt sein. Die innere Mantelfläche der Ausnehmung 116 weist jeweils eine Verjüngung 121 auf, an der ein zweiter Bund 122 angeordnet ist. In eingebautem Zustand der Verbindungsglieder 108 (Fig. 1), d.h. mit hergestellter Kopplung der Gehäuseteile 102 und 104, liegen der erste Bund 120 und die Verjüngung 121 in unterschiedlichen axialen Höhen in den Ausnehmungen 116. Die Verbindungsglieder 108 aus Hülsen 112 und Schrauben 110 sind also mit Spiel im zweiten Gehäuseteil 104 angeordnet.

Die Kopplung der beiden Gehäuseteile 102 und 104 wird durch insgesamt zwei Kopplungsvorrichtungen 100 mit Verbindungsgliedern 108 in Ausnehmungen 116 hergestellt, die sich beiderseits des Getrieberads 106 befinden. In dem Getrieberad 106 ist eine nicht näher dargestellte gezahnte Ausnehmung zur drehfesten Aufnahme einer Welle angeordnet, die das vom Motor ausgeübte Drehmoment auf Getriebeglieder im Gehäuse 102 überträgt.

Die Kopplung der beiden Gehäuseteile 102 und 104 mit Hilfe der Verbindungsglieder 108 erfolgt folgendermaßen: Vor der Montage der Gehäuseteile 102 und 104 befinden sich die Hülsen 112, wie in der Figur 3 dargestellt, so in den Ausnehmungen 116, daß der erste Bund 120 an der Außenfläche der Hülse 112 in axialer Höhe der Verjüngung 121, aber oberhalb des zweiten Bundes 122 an der Innenfläche der Ausnehmung 116 liegt. Die Durchmesser von Hülsen 112, Ausnehmungen 116, erstem Bund 120 und Verjüngung 121 sind so gewählt, daß in dieser Position eine Pressung der Hülsen 112 in den Ausnehmungen 116 erfolgt und dadurch eine axiale Verschiebung der Hülse verhindert wird. Der zweite Bund 122 hat die Funktion eines Anschlages beim Einführen der Hülsen 112 in die Ausnehmungen 116, der mit dem ersten Bund 120 zusammenwirkt, um ein weiteres Verschieben der Hülse 112 in die Ausnehmung 116 auf jeden Fall zu verhindern. Bei der Montage des zweiten Gehäuseteils an das erste Gehäuseteil 102 werden die Schrauben 110 in die Hülsen 112 eingeführt und in den Gewindebohrungen 114 des ersten Gehäuseteils 102 angezogen. Durch die von den Schrauben 110 auf die Hülsen 112 ausgeübte Axial kraft werden die Hülsen 112 aus dem Bereich der Pressung zwischen erstem Bund 120 und Verjüngung 121 gedrückt, so daß die Pressung nach Anziehen der Schrauben 110 aufgehoben ist und sich die Hülsen 112 in der in der Figur 1 dargestellten Lage befinden. Das Anzugsmoment der Schrauben 110 und die Festigkeit der Hülsen 112, die aus Messing bestehen, ist so zu wählen, daß sich die Hülsen durch das Anzugsmoment nicht verformen, so daß auf jeden Fall eine spielbehaftete Verbindung zum zweiten Gehäuseteil 104 erhalten bleibt.

Ein zweites Ausführungsbeispiel der erfindungsgemäßen Kopplungsvorrichtung ist in den Figuren 4, 5 und 6 dargestellt. Das zweite Gehäuseteil 204 entspricht bis auf die modifizierte Kopplungsvorrichtung dem zweiten Gehäuseteil 104; das erste Gehäuseteil ist hier der Übersichtlichkeit halber nicht dargestellt. Das zweite Gehäuseteil 204 ist, wie in der Fig. 6 gezeigt ist, an einer elektromotorischen Antriebseinheit 201 angeordnet.

Die Kopplungsvorrichtungen 200 weisen Verbindungsglieder 208 und diese aufnehmende Ausnehmungen 216 im zweiten Gehäuseteil 204 mit entlang des Innenumfangs der Ausnehmungen angeordneten Klemmrippen 230 auf. Die Verbindungsglieder bestehen wie im ersten Ausführungsbeispiel nach Figur 1 aus Hülsen 212, die von (nicht dargestellten) Schrauben durchgriffen sind. Die Schrauben sind bei hergestellter Kopplung gestellfest mit dem ersten Gehäuseteil durch Verschraubung verbunden. Die Hülsen 212 haben glatte Außenflächen, die an den Klemmrippen 230 anliegen. Die Querschnitte der Klemmrippen 230 sind, wie der Schnitt durch eine der Ausnehmungen 216 in der Figur 5 zeigt, halbkreisförmig ausgebildet, so daß die Hülsen 212 mit sehr kleinen Abschnitten ihrer Außenflächen 232 an den Scheitelpunkten 234 der Klemmrippen 230 anliegen. Insgesamt sind an den Innenwänden der Ausnehmungen 216 jeweils sechs Klemmrippen in axial gleicher Höhe angeordnet. Durch die geringe Anlagefläche bleiben die Hülsen 212 bedingt beweglich, jedoch so hinreichend fixiert, daß sie vor der Montage bzw. Kopplung in den Ausnehmungen 116 unverlierbar angeordnet sind. Gleichzeitig wird die Schallübertragung stark gedämpft. Auch in diesem Ausführungsbeispiel wird die Kopplung der beiden Gehäuseteile durch insgesamt zwei Verbindungsglieder 208 hergestellt, die in zwei Ausnehmungen 216 beiderseits des (hier nicht dargestellten) Getrieberades angeordnet sind.

In einer weiteren, nicht dargestellten Ausführungsform können die Verbindungsglieder 108 an dem Gehäuseteil 102 mit Spiel und/oder geringer Anlagefläche befestigbar und mit dem den Antrieb aufnehmenden Gehäuseteil 104 gestellfest verbindbar sein.

Die elektromotorische Antriebseihheit, zu der das zweite Gehäuseteil 104 bzw. 204 gehört, wird in Kraftfahrzeugen zur Sitzverstellung, zum Betreiben von Fenstern und Schiebedächern und anderer Stellteile eingesetzt.

## Patentansprüche

1. Kopplungsvorrichtung zur mechanischen Kopplung eines ersten Gehäuseteils (102) an ein zweites einer insbesondere elektromotorischen Antriebseinheit zugeordnetes Gehäuseteil (104, 204), dadurch gekennzeichnet, daß die Kopplung durch wenigstens ein Verbindungsglied (108, 208) erfolgt, das an dem ersten (bzw. zweiten) Gehäuseteil (102) gestellfest und an dem zweiten (bzw. ersten) Gehäuseteil mit Spiel (104) und/oder mit im Verhältnis zu seiner Gesamtfläche geringer Anlagefläche (204) befestigbar ist.

2. Kopplungsvorrichtung nach Anspruch 1, dadurch gekennzeichnet, daß das Verbindungsglied (108, 208) in einer Ausnehmung (116, 216) im zweiten Gehäuseteil (104, 204) angeordnet ist.

3. Kopplungsvorrichtung nach einem der vorhergehenden Ansprüche, dadurch gekennzeichnet, daß das Verbindungsglied (108) in ungekoppeltem Zustand an dem zweiten Gehäuseteil (104) fixierbar ist.

4. Kopplungsvorrichtung nach einem der Ansprüche 2 bis 3, gekennzeichnet durch eine Verjüngung (121, 230) der Ausnehmung (116, 216) und/oder einen den Querschnitt des Verbindungsgliedes erweiternden Bund (120).

5. Kopplungsvorrichtung nach Anspruch 4, dadurch gekennzeichnet, daß die Verjüngung der Ausnehmung (216) durch eine in Umfangsrichtung unterbrochene Rippenstruktur (230) gebildet ist.

6. Kopplungsvorrichtung nach Anspruch 5, dadurch gekennzeichnet, daß das Verbindungsglied (208) durch die als Klemmrippen wirkende Rippenstruktur axial fixierbar ist.

7. Kopplungsvorrichtung einem der Ansprüche 2 bis 6, dadurch gekennzeichnet, daß die Ausnehmung (216) zylinderförmig ist und mehrere Klemmrippen (230) an der Innenwand des Zylinders in im wesentlichen axial gleicher Höhe angeordnet sind.

8. Kopplungsvorrichtung nach einem der Ansprüche 6 oder 7, dadurch gekennzeichnet, daß die Klemmrippen (230) jeweils einen im wesentlichen halbkreisförmigen Querschnitt aufweisen und Abschnitte der Außenfläche (232) des Verbindungsgliedes an den Scheitelpunkten (234) der Halbkreise anliegen.

9. Kopplungsvorrichtung nach einem der Ansprüche 2 bis 8, dadurch gekennzeichnet, daß das Verbindungsglied (108) wenigstens eine äußere Querschnittserweiterung (120) und die Ausnehmung wenigstens eine Verjüngung (121) aufweist, die bei hergestellter Kopplung mit Abstand voneinander angeordnet sind und in ungekoppeltem Zustand zur Fixierung des Verbindungsgliedes (108) an dem zweiten Gehäuseteil (104) zusammenwirken.

10. Kopplungsvorrichtung nach einem der vorhergehenden Ansprüche, dadurch gekennzeichnet, daß das Verbindungsglied (108, 208) eine Hülse (112, 212) und eine Schraube (110) aufweist und die Schraube (110) die Hülse gestellfest mit dem ersten Gehäuseteil (102) verbindet.

11. Kopplungsvorrichtung nach Anspruch 10, dadurch gekennzeichnet, daß die Schraube (110) die in der Ausnehmung (116, 216) in dem zweiten Gehäuseteil angeordnete Hülse (112, 212) durchgreift und daß ein Schraubenkopf (118) der Schraube (110) einen Querschnitt aufweist, der größer als der Querschnitt der Ausnehmung (116, 216) ist.

12. Kopplungsvorrichtung nach einem der Ansprüche 10 oder 11, dadurch gekennzeichnet, daß die Länge der Hülse (112, 212) größer als die Länge der Ausnehmung (116, 216) ist.

13. Kopplungsvorrichtung nach einem der Ansprüche 10 bis 12, dadurch gekennzeichnet, daß die Hülse (112) in axialer Richtung geschlitzt ist.

14. Kopplungsvorrichtung nach einem der vorhergehenden Ansprüche, dadurch gekennzeichnet, daß eines der beiden Gehäuseteile (104, 204) ein Getriebegehäuse einer elektromotorischen Antriebseinheit (201) mit einer in das Getriebegehäuse verlängerten Motorankerwelle ist, die mit einem in dem Getriebegehäuse (104, 204) angeordneten Schneckenrad (106) in Eingriff steht.

15. Kopplungsvorrichtung nach Anspruch 14, dadurch gekennzeichnet, daß an dem Schneckenrad (106) ein Mittel zur Übertragung des Motordrehmoments in das andere der beiden gekoppelten Gehäuseteile drehsteif angeordnet ist.

16. Kopplungsvorrichtung nach einem der vorhergehenden Ansprüche, dadurch gekennzeichnet, daß das Verbindungsglied (108, 208) unelastisch ist.
